Europäisches Patentamt

European Patent Office

Office européen des brevets

(19)

(11) Numéro de publication: **0 010 495**
**B1**

(12) **FASCICULE DE BREVET EUROPEEN**

(45) Date de publication du fascicule du brevet: **30.12.81**

(21) Numéro de dépôt: **79400749.2**

(22) Date de dépôt: **15.10.79**

(51) Int. Cl.³: **G 06 K 9/03**, G 06 K 9/18, G 11 B 5/02

(54) Dispositif de correction d'erreurs dans un système de reconnaissance de caractères codés.

(30) Priorité: **19.10.78 FR 7829848**

(43) Date de publication de la demande:
**30.04.80 Bulletin 80/9**

(45) Mention de la délivrance du brevet:
**30.12.81 Bulletin 81/52**

(84) Etats Contractants Désignés:
**DE GB IT NL**

(56) Documents cités:
**DE - A - 1 774 642**
**FR - A - 1 295 497**
**US - A - 3 104 372**
**US - A - 3 764 978**
**US - A - 3 879 707**
**US - A - 3 895 350**

**IBM TECHNICAL DISCLOSURE BULLETIN, vol. 20, n° 8, janvier 1978, Armonk (US)**
**N. STAELBERG "Dynamic Decoding and Error Recovery System", pages 3316—3317.**

(73) Titulaire: **COMPAGNIE INTERNATIONALE POUR L'INFORMATIQUE CII - HONEYWELL BULL (dite CII-HB)**
**94, avenue Gambetta**
**F-75020 Paris (FR)**

(72) Inventeur: **Maussion, Daniel**
**Saint-Lambert-La-Potherie**
**F-49000 Angers (FR)**

(74) Mandataire: **Davroux, Yves**
**94, Avenue Gambetta**
**F-75020 Paris (FR)**

Courier Press, Leamington Spa, England.

Dispositif de correction d'erreurs dans un système de reconnaissance de caractères codés

L'invention concerne un dispositif de corrections d'erreurs dans un système de reconnaissance de caractères codés et matérialisés sur un document par une succession de groupements de segments de largeur constante alignés le long d'un trajet de lecture et séparés entre eux, pour définir un caractère donné, par des intervalles courts et des intervalles longs -les caractères étant eux-mêmes séparés par des intervalles très longs- qui sont reconnaissables électroniquement par détection d'un phénomène physique, notamment magnétique, par un type de capteur approprié, ce dispositif comprenant au moins une tête de lecture disposée en regard dudit trajet de lecture, un moyen d'entraînement assurant un mouvement relatif entre cette tête et ledit document, deux premiers circuits de commutation à seuil ayant des valeurs de seuil respectives différentes et chacun une entrée reliée à la sortie de signal analogique de la tête, et deux chaînes de reconnaissance distinctes. L'invention s'applique notamment mais non exclusivement à la lecture des caractères imprimés dans le code désigné par le sigle CMC7 (Caractère Magnétique Codé à sept éléments) largement utilisé en Europe par les Etablissements Financiers pour inscrire sur leurs formules de chèque les références principales, telles que le numéro de code de la Succursale émettrice, celui du compte du titulaire, etc...

Sur certains documents, des caractères spéciaux sont matérialisés (notamment imprimés au moyen d'une encre spéciale, par exemple magnétisable) pour pouvoir être lus automatiquement par des moyens électroniques. Ainsi, on utilise couramment des caractères formés par une succession de groupements de segments séparés entre eux par des intervalles choisis dans un ensemble de $n$ longueurs prédéterminées. D'autre part, chaque caractère défini par un nombre constant d'intervalles choisis dans les $n$ longueurs est séparé de son voisin par un intervalle plus long que le plus grand des $n$ intervalles.

Comme mentionné précédemment, le plus utilisé de ces codes est couramment désigné par le sigle CMC7. Ce code est susceptible de représenter des caractères alphanumériques qui présentent l'avantage de pouvoir aussi bien être lus par une machine (par détection d'un champ magnétique) que par un individu, puisque le caractère alphanumérique peut apparaître sur le document sous forme légèrement "hachée" mais néanmoins bien lisible. Plus le chiffre $n$ est grand, plus on peut coder de caractères différents. Ainsi, pour le code CMC7, c'est-à-dire plus précisément le code numérique limité à 15 caractères (10 chiffres et 5 symboles spéciaux) employé dans le traitement des chèques il y a 7 segments définissant 6 intervalles parmi lesquels il doit y avoir 2 intervalles longs et 4 intervalles courts. Les différentes combinaisons possibles de l'ordre de succession de ces intervalles courts et longs permettent de différencier les caractères. Ainsi, on rappellera que dans ce code CMC7, le chiffre 0 est défini par, successivement de la gauche vers la droite, deux intervalles courts, deux intervalles longs et deux intervalles courts; le chiffre 1 est défini par un intervalle long, trois intervalles courts, un intervalle long et un intervalle court; le chiffre 2 est défini par un intervalle court, deux invervalles longs et trois intervalles courts; etc... Les valeurs normalisées des intervalles sont définies comme suit:
— entraxe de deux segments séparés par un espace court (intervalle court)

$$a = 300 \ \mu m$$

— entraxe de deux segments separés par un espace long (intervalle long)

$$b = 500 \ \mu m$$

— largeur d'un segment

$$1 = 150 \ \mu m$$
— valeur de l'intervalle très long (entre deux caractères successifs)

$$c \geqslant 950 \ \mu m$$

Le plus souvent, les segments, espacés des intervalles précités, sont imprimés avec une encre magnétisable.

On connait plusieurs modes de lecture de ces caractères codés.

Le premier mode de lecture qui a été décrit en particulier dans le brevet français n° 1271150 et dans sa première addition n° 79378 consiste à faire défiler le document devant une unique tête de lecture à un seul capteur et à mesurer les intervalles de temps séparant le passage de deux segments successifs devant l'entrefer de cette tête de lecture. Le système a donc l'inconvénient majeur d'exiger une stabilisation parfaite de la vitesse de défilement.

Un second mode de lecture, décrit en particulier dans le brevet français n° 2 289 010 intitulé "Dispositif de lecture d'une information", permet de différencier les intervalles courts et longs en utilisant deux têtes de lecture à un seul capteur (ou une tête de lecture double à deux capteurs) décalées d'une distance égale à l'un des intervalles.

On détecte alors la simultanéité ou la non simultanéité de passage des segments devant les deux têtes, pour différencier un intervalle long d'un intervalle court. En outre, pour pouvoir sans inconvénients réduire la vitesse de défilement, le dispositif décrit dans ce brevet utilise des capteurs réalisés avec des magnéto-résistances sensibles à l'intensité du champ magnétique reçu et non à sa variation. Des lecteurs à magnéto-résistances sont décrits dans les documents de brevet français n° 2 389 180 et 2 390 778 publiées respectivement le 24 novembre 1978 et le 8 décembre 1978. Cependant, dans le cas du code CMC7, on ne peut reconnaître l'intervalle très long avec deux magnéto-résistances décalées d'une distance égale à l'un des intervalles.

Malgré les avantages présentés par les caractères codés formés de segments séparés les uns des autres par des intervalles courts et des intervalles longs, l'impression de ces segments donne lieu à des défauts d'encrage pouvant conduire à une identification erronée du fait que les signaux de lecture engendrés lors de la détection de ces segments ont alors une amplitude insuffisante. Par ailleurs, dans le cas des caractères codés imprimés avec une encre magnétisable, une autre cause d'indentification erronée peut provenir des inclusions métalliques, et spécialement ferreuses, qui se trouvent dans le papier du document. L'inclusion ferreuse étant magnétisée, come les caractères, avant la lecture, il est clair qu'à l'analyse une inclusion importante peut, ou bien être prise pour un segment de caractère, ou masquer un intervalle, selon sa position. On constate d'ailleurs les mêmes défauts lorsque l'analyse est effectuée par des moyens photo-électriques ou électro-optiques. En effet, les manques d'encre, la présence de marques ou taches indésirables peuvent provoquer des erreurs dans l'identification comme on l'a indiqué ci-dessus.

Un moyen connu pour éliminer les documents défectueux consiste à disposer un dispositif de détection d'erreurs à la sortie du système d'identification de caractères. Un tel dispositif a été notamment décrit dans le brevet français précité n° 1 271 150 et dans sa première additon n° 79 378. Dans ce dispositif, un discriminateur d'amplitude ou amplificateur à seuil d'écrêtage est placé sur le trajet de la chaîne de lecture associée au système d'identification. On peut régler le niveau du seuil de façon que ce dispositif ne transmette aux organes de reconnaissance que les signaux dont l'amplitude dépasse nettement ledit niveau de seuil. Etant donné que les défauts d'encrage et les inclusions sont des causes d'erreurs à effets contraires, on est conduit à choisir une valeur de compromis pour le niveau de seuil appliqué au discriminateur d'amplitude. Toutefois, avec un tel dispositif de détection d'erreurs, on constate à l'usage que le pourcentage ou taux d'erreurs détectées varie en fonction du niveau de seuil adopté pour le discriminateur d'amplitude inclus dans la chaîne de lecture. Le nombre de documents rebutés en raison d'inclusions métalliques augmente si l'on diminue la valeur du niveau de seuil, tandis que le nombre de documents rebutés en raison de manque d'encrage augmente en même temps que l'on augmente la valeur du niveau de seuil. Lorsqu'on a choisi un niveau de seuil optimal pour un lot de documents de qualité moyenne, on constate alors que le nombre d'erreurs détectées est beaucoup plus grand que le nombre de documents réellement défectueux. Par documents réellement défectueux, on entend ceux dont un ou plusieurs caractères donnent lieu à une impossibilité d'utilisation dans une machine de traitement automatique de documents.

Afin de réduire considérablement le nombre de documents indûment rebutés, tout en conservant la sécurité requise pour la détection des documents réellement défectueux, on a proposé un dispositif de détection d'erreurs qui a été décrit dans le brevet français n° 1 295 497 et dans lequel deux arrangements de reconnaissance sont disposés en parallèle de manière à recevoir les signaux de lecture provenant d'un seul et même capteur. Dans ce dispositif, les deux arrangements de reconnaissance sont rigoureusement identiques, à cela près que les niveaux de seuil appliqués aux discriminateurs d'amplitude inclus dans ces arrangements sont de valeurs différentes. Chacun de ces arrangements comporte, d'une part, un registre à décalage dans lequel sont emmagasinées temporairement les valeurs binaires attribuées aux différents intervalles longs et courts séparant les segments successifs du caractère qui vient de défiler devant le capteur de la tête de lecture, d'autre part, un détecteur d'erreur qui engendre un signal d'erreur lorsque le nombre de segments comptés et/ou le nombre d'intervalles longs comptés sont incorrects. Le dispositif décrit dans ce brevet français n° 1 295 497 comporte en outre des circuits de commutation logiques qui permettent de transférer vers un magasin tampon unique l'une des deux combinaisons binaires enregistrées temporairement dans les deux registres à décalage, ce transfert étant effectué sous le contrôle des détecteurs d'erreur. Au premier arrangement de ce dispositif est appliqué un niveau de seuil relativement élevé. Ainsi, les erreurs dûes à une inclusion métallique prennent une importance prépondérante à la sortie du premier arrangement, tandis que celles dûes à un défaut d'encrage prennent une importance prépondérante à la sortie du second arrangement. La coopération de ces arrangements est établie de telle sorte que lorsqu'une erreur est détectée seulement par le premier arrangement, la combinaison binaire contenue dans le registre à décalage du second arrangement est quand même transférée vers le magasin tampon. C'est seulement lorsqu'une erreur est détectée simultanément à la sortie des deux arrangements que tout transfert de combinaison binaire vers le magasin tampon est empêché. Le dispositif décrit dans ce brevet français n° 1 295 497 permet bien de détecter une erreur de lecture dûe, par exemple, à une tache placée sur un intervalle court et suffisamment importante pour masquer l'espace entre deux segments. Dans ce cas, en effet, le nombre de segments comptés et/ou le nombre d'intervalles longs comptés sont incorrects. Mais ce dispositif présente l'inconvénient de ne pas pouvoir détecter une erreur dûe à une tache ou à une inclusion placée dans un intervalle long et à proximité d'un segment, de telle sorte que ce segment divienne équivalent à un segment plus épais. Dans ce cas, en effet, cet intervalle long peut être interprêté comme étant un intervalle court, alors que l'intervalle suivant, que l'on suppose normalement court, peut être interprêté comme étant un intervalle long. Ainsi, tout se passe comme s'il y avait eu déplacement d'un intervalle long, et l'erreur qui en résulte ne peut être détectée puisque, ni le nombre d'intervalles longs comptés, ni le nombre de segments lus ne sont incorrects. Un autre inconvénient présenté par ce dispositif vient de ce que, la discrimination des différents types d'intervalles étant effectuée en résultat d'une mesure du temps écoulé entre les signaux envoyés successivement par la tête de lecture, il nécessite l'utilisation de dispositifs de mesure du temps qui sont relativement coûteux et qui exigent, pour leur fonctionnement correct, une vitesse de défilement du document rigoureusement constante.

La présente invention remédie à ces inconvénients et propose un dispositif de correction d'erreurs qui, non seulement présente l'avantage de s'affranchir d'une discrimination des différents intervalles basée sur une mesure du temps, mais permet de reconnaître un caractère "bon" quand, par exemple, les défauts d'encrage et les inclusions métalliques représentent des défauts locaux négligeables par rapport à l'encrage moyen des segments du caractère considéré. Ainsi, le dispositif proposé est capable à la fois de détecter la plupart des erreurs de lecture, de corriger automatiquement certaines d'entre elles ou au moins de signaler une erreur de lecture non corrigeable automatiquement.

Plus précisément, la présente invention concerne un dispositif de corrections d'erreurs dans un système de reconnaissance de caractères codés et matérialisés sur un document par une succession de groupements de segments de largeur constante alignés le long d'un trajet de lecture et séparés entre eux, pour définir un caractère donné, par des intervalles courts et des intervalles longs — les caractères étant eux-mêmes séparés par des intervalles très longs — qui sont reconnaissables électroniquement par détection d'un phénomène physique, notamment magnétique, par un type de capteur approprié, ce dispositif comprenant au moins une tête de lecture disposée en regard dudit trajet de lecture, un moyen d'entraînement assurant un mouvement relatif entre cette tête et ledit document, deux premiers circuits de commutation à seuil ayant des valeurs de seuil respectives différentes et chacun une entrée reliée à la sortie de signal analogique de la tête, deux chaînes de reconnaissance distinctes comprenant chacune un premier moyen monostable relié à l'un respectif des premiers circuits de commutation à seuil, un premier circuit combinatoire réalisant le produit logique et dont l'une des entrées est reliée audit premier moyen monostable et un premier moyen formant mémoire et pourvu d'une entrée connectée à la sortie dudit premier circuit combinatoire, ce dispositif comprenant encore, d'une part un cirucit de sélection avec une entrée de chaque chaîne de reconnaissance, ce circuit de sélection comportant des moyens de pilotage permettant de connecter une entrée à la sortie, d'autre part des moyens de détection d'erreur d'identification connectés auxdites chaînes de reconnaissance et couplés auxdits moyens de pilotage pour activer ces derniers à provoquer et poursuivre un ordre de succession prédéterminé tant qu'une erreur est détectée dans les signaux transmis, ledit dispositif étant caractérisé en ce que ladite tête comporte deux capteurs de type précité, espacés l'une de l'autre d'une distance e vérifiant la double inégalité:

$$b - 1 < e < a + 1$$

a et b représentant respectivement un intervalle court et un intervalle long et 1 représentant la largeur d'un segment précité, le premier capteur étant disposé pour lire la présence desdits segments avant le second capteur pendant un mouvement relatif entre ladite tête et ledit document, chacun de ces capteurs étant pourvu d'une sortie de signal analogique représentatif des intervalles lus par ce capteur, et en ce qu'il comporte:

— $m$ (m entier supérieur à 1) premiers circuits de commutation à seuil, ayant des valeurs de seuil respectives différentes et pourvus chacun d'une entrée reliée à la sortie de signal analogique du premier capteur,

— $m$ seconds circuits de commutation à seuil, ayant chacun une valeur de seuil égale à celle de l'un respectif de m premiers circuits de commutation à seuil, et pourvus chacun d'une entrée reliée à la sortie de signal analogique du second capteur,

— $m$ chaînes de reconnaissance distinctes ($m$ entier supérieur à 1) comportant chacune:

— le premier moyen monostable sensible à un front montant, ce premier moyen étant relié à l'un respectif des $m$ premiers circuits de commutation à seuil et étant agencé pour être activé à chaque front montant du signal provenant de ce premier circuit de commutation à seuil,

— le premier circuit combinatoire dont les entrées sont reliées audit premier moyen monostable et au second circuit de commutation à seuil qui a la même valeur de seuil que ledit premier circuit de commutation à seuil, ce premier circuit combinatoire étant agencé pour fournir un signal de sortie significatif lorsqu'un signal en provenance dudit premier moyen monostable survient pendant la durée d'une impulsion engendrée par ce second circuit de commutation à seuil,

— le premier moyen formant mémoire et pourvu d'une entrée connectée à la sortie dudit premier circuit combinatoire,

— un second moyen monostable sensible à un front descendant, ce second moyen étant relié au même premier circuit de commutation à seuil que ledit premier moyen monostable, ce second moyen monostable étant agencé pour être activé a chaque front descendant du signal provenant dudit premier circuit de commutation à seuil,

— un second moyen combinatoire réalisant le produit logique et dont les entrées sont reliées audit second moyen monostable et au second circuit de commutation à seuil qui a la même valeur de seuil que ledit premier circuit de commutation à seuil, ce second moyen combinatoire étant agencé pour fournir un signal de sortie significatif lorsqu'un signal en provenance dudit second moyen monostable survient pendant la durée d'une impulsion engendrée par ce second circuit de commutation à seuil,

— et un second moyen formant mémoire et pourvu d'une entrée connectée à la sortie dudit second circuit combinatoire,

— un circuit de sélection à $m$ positions comportant deux sorties de signaux correspondant respectivement à un intervalle long et à un intervalle court, et $m$ groupes de deux entrées reliés chacun respectivement aux sorties des premier et second moyens formant mémoire de chacune respective des $m$ chaînes de reconnaissance, ce circuit de sélection comportant également des moyens de pilotage permettant de connecter les deux entrées de l'un des $m$ groupes aux deux sorties dudit circuit de sélection dans un ordre de succession prédéterminé allant du groupe relié à la chaîne de reconnaissance associée aux circuits de commutation à seuil le plus bas jusqu'au groupe relié à la chaîne de reconnaissance associée aux circuits de commutation à seuil le plus haut, les chaînes de reconnaissance reliées auxdits $m$ groupes successifs de deux entrées correspondant à des seuils de valeurs croissantes,

— et des moyens de détection d'erreur d'identification connectés auxdites chaînes de reconnaissance et indiquant une erreur si deux impulsions apparaissent simultanément dans la chaîne de reconnaissance associée aux circuits de commutation à seuil le plus bas, ou s'il y a présence d'une impulsion du premier circuit au seuil bas et absence d'une impulsion en provenance du premier moyen formant mémoire, ces moyens de détection d'erreur étant couplés auxdits moyens de pilotage pour activer ces derniers à provoquer et poursuivre l'ordre de succession prédéterminé précité tant qu'une erreur est détectée dans les signaux transmis par celle des $m$ chaînes de reconnaissance dont les sorties sont alors connectées aux sorties dudit circuit de sélection.

L'invention sera mieux comprise et d'autres buts, détails et avantages de celle-ci apparaîtront mieux à la lumière de la description explicative qui va suivre de plusieurs modes de réalisation du système selon l'invention donnée uniquement à titre d'exemple et faite en référence aux dessins non limitatifs annexés dans lesquels:

— la figure 1 représente un chronogramme montrant les caractéristiques des signaux engendrés par des circuits de commutation à seuils différents, à partir du même signal analogique;

— la figure 2 est un exemple de circuit de commutation à seuil utilisable dans le cadre de l'invention;

— la figure 3 représente un schéma-bloc d'un dispositif de corrections d'erreurs selon l'invention, avec une tête de lecture comportant deux capteurs à magnétorésistance especés entre eux d'une distance $e$ vérifiant le double inégalité indiqué ci-dessus;

— la figure 4 représente un mode de réalisation avantageux d'un moyen formant monostable sensible au front montant du signal d'entrée;

— la figure 5 est un chronogramme expliquant le fonctionnement du circuit de la figure 5;

— la figure 6 est un schéma montrant une combinaison d'un moyen formant monostable sensible au front montant et d'un moyen formant monostable sensible au front descendant du signal d'entrée;

— la figure 7 est un schéma montrant une combinaison du circuit de la figure 6 avec les circuits combinatoires représentés à la figure 3;

— la figure 8 est un schéma montrant les circuits d'élaboration des signaux d'échantillonnage (ou de validation) et des signaux de remise à zéro du système selon l'invention;

— les figures 9 et 10 sont des chronogrammes montrant les différents types d'anomalies détectables par le système;

— la figure 11 illustre un mode de réalisation du circuit ERb de la figure 3; et

— la figure 12 illustre un mode de réalisation des circuit ERh et F de la figure 3.

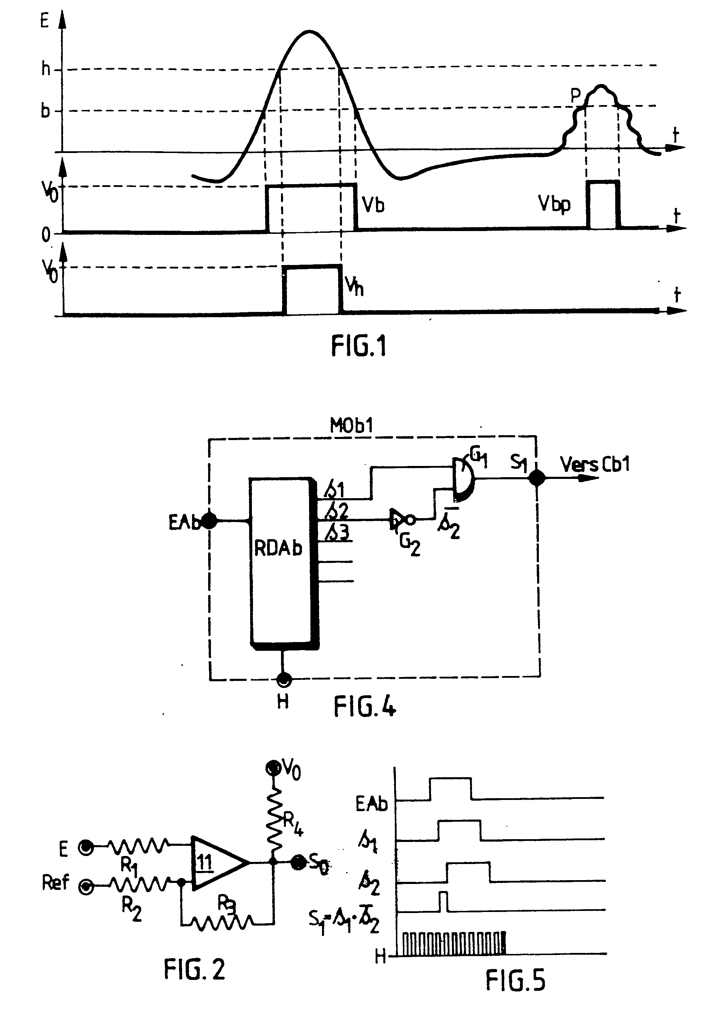

En se référant à la figure 1, on a représenté une forme de signal analogique conforme à la réponse d'un capteur à magnétorésistance (ncn représenté) lorsqu'un segment magnétisé du document passe à proximité dudit capteur. La figure 2 représente un circuit de commutation à seuil, classique, pouvant recevoir le signal analogique de la figure 1 et le transformer en l'une des deux impulsions à fronts raides Vb ou Vh. Ce circuit de commutation se compose d'un amplificateur différentiel 11 à très grand gain en boucle ouverte, connecté de façon très classique aux résistances $R_1$, $R_2$, $R_3$ et $R_4$. Le signal analogique

est appliqué à l'entrée E à la borne libre de la résistance R₁ et une tension de référence (de valeur h ou b suivant que le circuit de commutation est réglé sur le seuil haut ou bas) est appliqué en permanence à l'entrée Ref, à la borne libre de la résistance R₂. L'impulsion Vb ou Vh est disponible à la sortie S₀. Etant donné son gain important, l'amplificateur différentiel 11 se trouve toujours dans son état bloqué ou dans son état saturé, suivant que la valeur du signal analogique est supérieure ou inférieure à la valeur du seuil h ou b choisi et appliqué à l'entrée Ref. On notera qu'étant donnée la forme du signal analogique (ou plus exactement de sa partie centrale positive utilisable) plus le seuil choisi est bas, plus la durée de l'impulsion à fronts raides résultante est longue. Autrement dit, une chaîne de reconnaissance associée au seuil bas est nécessairement la plus sensible. Le circuit de commutation correspondant fournit des impulsions "larges" plus facilement traitées par les circuits de logique numérique qui composent la chaîne de reconnaissance de caractères reliée à ce circuit de commutation. Autant que peut se faire, lorsque les conditions de lecture sont bonnes, on a donc intérêt à prendre en compte les résultats d'identification de la chaîne de reconnaissance associée au seuil le plus bas. Cependant, c'est sur cette chaîne de reconnaissance qu'il y a le plus de possibilités d'avoir des impulsions parasites. Ces impulsions peuvent être notamment provoquées par de petites taches d'encre magnétisable, lorsque les caractères sont imprimés par ce moyen sur le document. Un signal analogique parasite P, généralement de faible amplitude, est représenté sur la figure 1 et on voit que celui-ci donne naissance à une impulsion parasite Vbp sur le circuit de commutation à seuil bas tandis qu'aucune impulsion parasite n'est engendrée par le circuit de commutation à seuil haut. Dans ce cas, on a intérêt à prendre en considération les signaux impulsionnels transmis à la chaîne de reconnaissance associée au seuil haut. C'est ce que l'invention se propose de réaliser automatiquement.

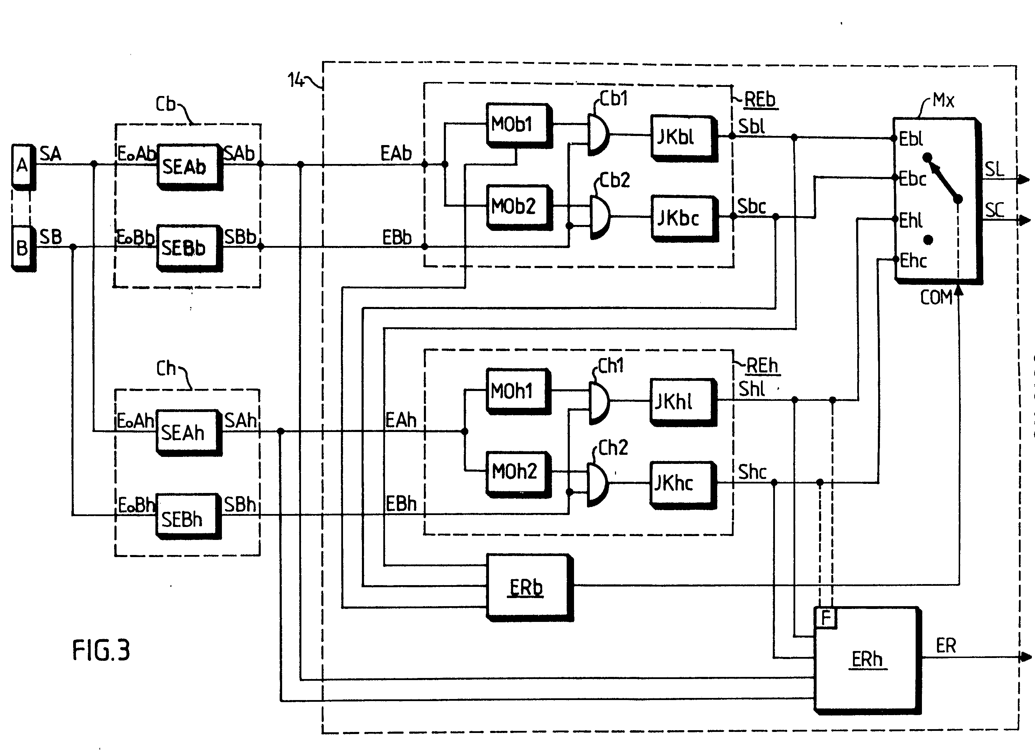

Le dispositif de corrections d'erreurs qui est représenté sur la figure 3 utilise une tête de lecture double à deux capteurs à magnétorésistance espacés entre eux d'une distance *e* vérifiant la relation:

$$b - 1 < e < a + 1$$

Dans la suite du texte, on appellera indifféremment premier capteur ou capteur A celui qui est disposé pour lire le premier la présence d'un segment magnétisé lors du mouvement relatif utile entre la tête de lecture et le document, et second capteur ou capteur B l'autre capteur lisant les mêmes informations que le capteur A mais décalées dans le temps à cause de l'espacement *e* (400 μm dans le cas du code CMC7) entre les deux capteurs. Dans le même ordre d'idée, les éléments de circuit recevant des signaux en provenance du premier capteur porteront la lettre-indice: A dans leur référence tandis que les éléments de circuit recevant des signaux en provenance du deuxième capteur porteront la lettre-indice B dans leur référence.

De même, les éléments de circuit en relation avec un seuil haut comporteront dans leur référence la lettre-indice h, tandis que ceux en relation avec un seuil bas comporteront dans leur référence la lettre-indice b. Dans ces conditions, la dispositif représenté sur la figure 3 comportera deux circuits de conversion analogique-numérique Cb et Ch comportant chacun deux circuits de commutation à seuil. Le circuit de conversion Cb comporte donc les deux circuits de commutation à seuil SEAb et SEBh dont les sorties respectives sont connectés aux entrées EAb, EBb de la chaîne de reconnaissance REb associé au seuil bas. De même, le circuit de conversion Ch comporte les deux circuits de commutation à seuil SEAh et SEBh dont les sorties sont connectés aux entrées EAh, EBh de la chaîne de reconnaissance REh associée au seuil haut. Les circuits SEAb et SEBb sont réglés sur le seuil bas, alors que les circuits SEAh et SEBh sont réglés sur le seuil haut, ce réglage étant effectué de la manière qui a été indiquée plus haut. La sortie de signal analogique SA du capteur A est reliée aux entrées EOAb et EOAh des circuits SEAb et SEAh tandis que la sortie de signal analogique SB du capteur B est reliée aux entrées EOBb et EOBh des circuits SEBb et SEBh. La chaîne de reconnaissance REb comporte deux entrées EAb et EBb connectées respectivement aux sorties SAb et SBb des circuits SEAb et SEBb. La chaîne REb comporte en outre deux sorties Sbl et Sbc qui correspondent aux deux types d'intervalles possibles (long et court), cette chaîne etant agencée, d'une manière qui sera exposée ci-dessous, pour délivrer un signal à l'une respective des sorties Sbl et Sbc selon qu'un intervalle long ou court a été identifié. De même, la chaîne de reconnaissance REh comporte deux entrées EAh et EBh connectées respectivement aux sorties SAh et SBh des circuits SEAh et SEBh. Cette chaîne REh comporte en outre deux sorties Shl et Shc qui sont analogues aux sorties Sbl et Sbc de la chaîne REb. On va maintenant décrire plus particulièrement la chaîne de reconnaissance REb; la chaîne REh ayant la même structure.

La chaîne de reconnaissance REb comprend d'abord un "moyen formant monostable sensible à un front montant" MObl, c'est-à-dire agencé pour être activé à chaque front montant de son signal d'entrée et un "moyen formant monostable sensible à un front descendant" MOb2 c'est-à-dire agencé pour être activé à chaque front descendant de son signal d'entrée. On verra plus loin comment on réalise l'un ou l'autre de ces "moyens formant monostables" à partir de registres à décalage. Ces moyens formant monostables sont connectés pour recevoir les signaux appliqués à l'entrée EAb. Dans ces conditions, le monostable MOb1 fournira un signal de sortie significatif pour chaque front montant de chaque impulsion engendrée par le circuit SEAb tandis que le monostable MOb2 fournira un signal de sortie significatif pour chaque front descendant de chaque impulsion engendrée par le circuit SEAb. Par ailleurs, la sortie du monostable MOb1 est reliée à une entrée d'un premier circuit combinatoire Cb1 dont une autre entrée est reliée à l'entrée EBb (pour recevoir le signal engendré par le circuit SEBb). De même, la sortie du monostable MOb2 est reliée à une entrée d'un second circuit combinatoire Cb2 dont une autre entrée est reliée à l'entrée EBb. Par "circuit combinatoire" on désigne toute porte logique ou circuit de portes agencé pour réaliser le produit logique ("par opposition à la somme logique") des signaux d'entrée.

C'est pourquoi sur la figure 3, chaque circuit combinatoire a été symbolisé par une porte ET (mais on pourrait aussi utiliser une porte NON-ET). En d'autres termes, compte tenu de ce qui précède, on peut dire que le circuit combinatoire Cb1 est agencé pour fournir un signal de sortie significatif lorsqu'un signal en provenance du premier moyen formant monostable MOb1 survient pendant la durée d'une impulsion engendrée par le circuit de commutation à seuil SEBb, associé au capteur B. De même, le circuit combinatoire Cb2 est agencé pour fournir un signal de sortie significatif lorsqu'un signal en provenance du second moyen formant monostable MOb2 survient pendant la durée d'une impulsion engendrée par le circuit de commutation à seuil SEBb. Les sorties des circuits combinatoires Cb1 et Cb2 sont respectivement reliées aux entrées d'un premier et d'un second moyen formant mémoire JKb1 et JKbc (puisque dans la pratique il peut s'agir de simples bascules JK) de sorte que lesdits "signaux de sortie significatifs" des circuits Cb1 et Cb2 sont immédiatement mémorisés et apparaissent aux sorties Sb1 et Sbc reliées respectivement aux sorties des mémoires JKb1 et JKbc.

Le dispositif de correction d'erreurs qui est représenté sur la figure 3 comporte encore deux circuits de détection d'erreur ERb et ERh et un circuit de sélection MX (essentiellement constitué d'un multiplexeur à deux voies). Les deux circuits de détection d'erreur ERb et ERh sont reliés respectivement aux chaînes de reconnaissance REb et REh et sont susceptibles de déceler certaines erreurs de lecture transmises sur ces chaînes de reconnaissance. Par ailleurs, le multiplexeur MX comporte deux sorties SL et SC qui sont en fait également les sorties du dispositif de correction d'erreurs. Ce multiplexeur comporte en outre deux groupes de deux entrées reliés chacun et respectivement à un groupe de deux sorties des deux chaînes de reconnaissance REb et REh. Ainsi, les sorties Sb1 et Sbc sont reliées à un premier groupe de deux entrées Eb1 et Ebc tandis que les sorties Sh1 et Shc sont reliées à un second groupe de deux entrées Eh1 et Ehc. Le multiplexeur MX est agencé pour faire correspondre sélectivement aux sorties SL, SC, soit les entrées Eb1 Ebc reliées à la chaîne de reconnaissance REb (associée au seuil le plus bas) soit les entrées Eh1, Ehc reliées à la chaîne de reconnaissance REh (associée au seuil le plus haut). La transition est assurée par des moyens de pilotage réagissant à un signal de commande engendré par le circuit ERb relié à l'entrée COM du multiplexeur MX. Ainsi, lorsqu'aucune erreur d'identification n'est perçue pendant le fonctionnement de la chaîne de reconnaissance REb, le multiplexeur est maintenu dans une première position pour laquelle les entrées Eb1, Ebc correspondent respectivement aux sorties SL, SC. En revanche, si le circuit ERb signale une erreur, une impulsion de commande est appliquée à l'entrée COM qui active les moyens de pilotage du multiplexeur. Ce dernier fait alors correspondre les entrées Eh1, Ehc avec les sorties SL, SC, respectivement. Si le circuit ERh ne détecte aucune erreur d'identification sur la chaîne de reconnaissance REh (cas illustré à la figure 1), la lecture est considérée comme correcte et tout se passe comme si le système avait corrigé lui-même et automatiquement son erreur de lecture. En revanche, si l'erreur subsiste, le circuit ERh peut être relié à une sortie ER pour transmettre un signal susceptible d'être pris en compte par une unité de traitement et d'identification des caractères (non représentée) connectée en aval du dispositif décrit sur la figure 3, c'est-à-dire en fait branchée pour recevoir au moins les signaux apparaissant aux sorties SL, SC et ER.

Il est bon en effet de rappeler que le dispositif de la figure 3 n'est qu'un dispositif de lecture et de corrections d'erreurs et non un dispositif d'identification complète des caractères. L'unité de traitement et d'identification mentionnée ci-dessus est conçue pour déterminer quel caractère a été lu à partir de l'ordre dans lequel les impulsions apparaissent aux sorties SL et SC. Ainsi, nous rappelons que pour le chiffre 0, on aura successivement deux impulsions à la sortie SC puis deux impulsions à la sortie SL et enfin deux impulsions à la sortie SC. D'autres moyens, non décrits sur la figure 3, permettent à ladite unité de traitement et d'identification de reconnaître le début et la fin de la lecture d'un caractère (intervalle très long dans le cas du code CMC7). Si un signal est transmis à la sortie ER pendant la lecture d'un caractère, l'unité de traitement et d'identification "saura" alors qu'une anomalie pendant la lecture de ce caractère n'a pu être corrigée; puisque le signal d'erreur a été engendré par le circuit de détection d'erreur connecté à la chaîne de reconnaissance REh associée au seuil le plus haut. L'unité de traitement et d'identification pourra alors être programmée pour émettre un "signal de non reconnaissance" d'un caractère lu, signalant l'anomalie à un opérateur. On peut noter également que la sortie ER peut facilement être supprimée s'il est désirable de limiter le nombre de connexions entre le dispositif de lecture décrit et l'unité de traitement et d'identification susmentionnée. Il suffit pour cela de prévoir des moyens de forçage F associés au circuit ERh et connectés au multiplexeur MX. Cette variante est illustrée par les liaisons en traits interrompus sur la figure 3. En effet, on a vu que l'unité de traitement et d'identification est programmée pour interpréter l'ordre de succession des impulsions qui apparaissent aux sorties SL et SC. Il est donc aisé de compléter cette unité pour lui faire interpréter la *simultanéité* de deux impulsions aux sorties SL et SC comme une erreur (car un intervalle lu ne peut à la fois être long et court). Ainsi, dans le cas du mode CMC7, "l'intelligence" de l'unité de traitement et d'identification pourrait être résumée par la Table de Vérité suivante:

| SC | SL | Interprétation |
|----|----|----------------|
| 1 | 0 | Intervalle court |
| 0 | 1 | Intervalle long |
| 0 | 0 | Intervalle très long |
| 1 | 1 | Erreur |

Dans ces conditions, si les moyens de forçage F sont activés par le circuit ERh pour appliquer deux impulsions simultanément aux sorties SL et SC, en cas d'erreur de lecture non corrigeable automatiquement, la sortie ER peut être avantageusement supprimée.

La généralisation à un dispositif de correction d'erreurs comportant plus de deux valeurs de seuil (m > 2) peut être aisément déduite de ce qui précède. Il suffirait de prévoir $m$ chaînes de reconnaissance, un multiplexeur à $m$ groupes de deux entrées et à $m$ positions; la position dudit multiplexeur étant déterminée par lesdits moyens de pilotage de ce dernier, activés à partir des $(m - 1)$ circuits de détection d'erreurs sur les $(m - 1)$ chaînes de reconnaissance associées aux $(m - 1)$ seuils les plus bas; pour faire correspondre successivement les $m$ groupes d'entrée aux sorties dudit multiplexeur jusqu'à ce que, éventuellement, le circuit de détection d'erreur sur l'une des chaînes d'identification, associée à un seuil donné, n'enregistre plus d'erreur de lecture; les signaux transmis par cette chaîne étant alors validés et pris en compte par l'unité de traitement et d'identification. D'autre part, le circuit de détection d'erreur sur la chaîne de reconnaissance associée au seuil le plus haut serait par exemple couplé à des moyens de forçage F du type décrit ci-dessus.

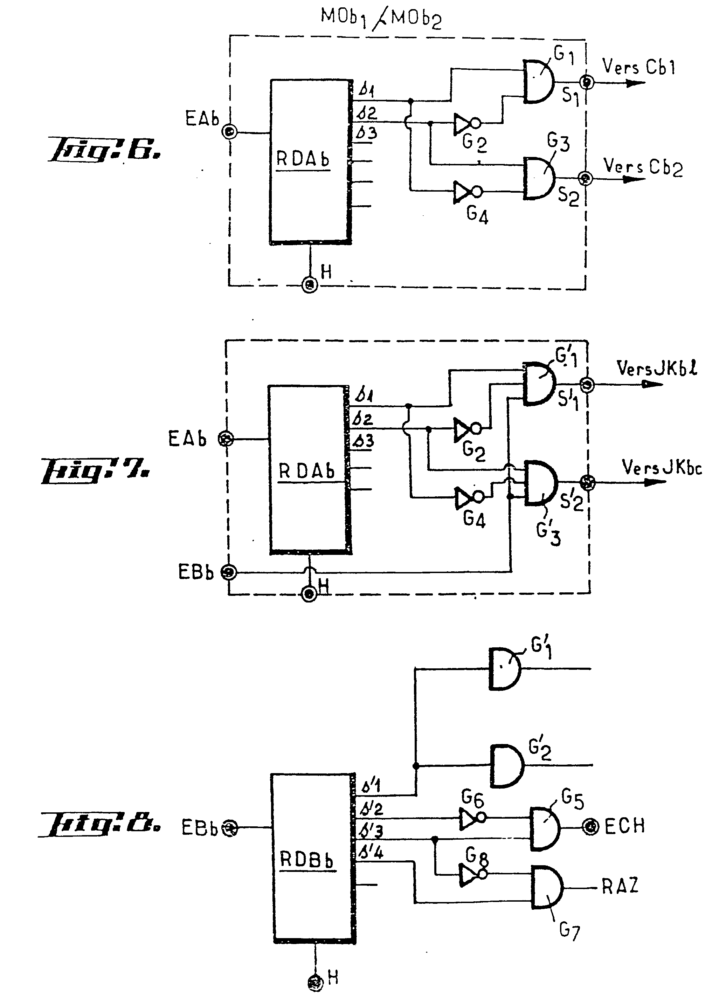

On va maintenant décrire plus particulièrement un moyen formant monostable, en référence à la figure 4. On supposera, pour l'exemple, qu'il s'agit du monostable MOb1. L'entrée est donc EAb et la sortie S1 est reliée au circuit combinatoire Cb1. On utilise un registre à décalage RDAb dont l'entrée de signal est reliée à l'entrée EAb (pour recevoir les impulsions engendrées par le circuit de commutation à seuil bas SEAb relié au premier capteur A). Une entrée H du registre à décalage reçoit un signal d'horloge à fréquence relativement élevée. Le registre comporte en outre un certain nombre de sorties s1, s2, s3, s4. Comme cela résulte du fonctionnement normal du registre à décalage, une impulsion appliquée à l'entrée EAb sera transmise à la sortie s1 avec un retard 1H (retard d'une impulsion d'horloge), à la sortie s2 avec un retard 2H, à la sortie s3 avec un retard 3H ... Ceci est illustré sur la figure 5. Dans le montage de la figure 4, la sortie s1 est connectée à une entrée d'une porte ET à deux entrées, G1 (ou une porte NON-ET à deux entrées) et la sortie s2 est connectée à la deuxième entrée de cette même porte par l'intermédiaire d'une porte NON, G2. Le signal disponible à la sortie s1 est conforme à la condition logique:

$$S1 = s1.\overline{s2}$$

On voit sur la figure 5 qu'il s'agit d'une impulsion de durée 1H coïncidant sensiblement dans le temps avec le front de montée du signal appliqué à l'entrée EAb. On a donc bien réalisé une fonction "monostable sensible au front montant" puisqu'on obtient en sortie une impulsion de durée déterminée de valeur 1H (monostable) coïncidant avec le front de montée du signal d'entrée.

Pour obtenir une fonction "monostable sensible au front descendant" il suffit de réaliser la condition logique:

$$S2 = \overline{s1}.s2$$

ce qui ne demande qu'une porte ET (ou une porte NON-ET) et qu'une porte NON. On voit donc qu'il n'est pas nécessaire d'utiliser deux registres à décalage pour réaliser les circuits MOb1 et MOb2. Ceux-ci peuvent être aisément combinés de la façon représentée sur la figure 6. Le porte ET supplémentaire est G3 et sa sortie est S2. La porte NON supplémentaire est G4; sont entrée est connectée à la sortie s1 et sa sortie à une entrée de la porte G3. L'autre entrée de la porte G3 est directement connectée à la sortie S2.

Sur le plan de la réalisation pratique, il est encore possible d'économiser des composants en combinant les monostables MOb1 et MOb2 avec les circuits combinatoires Cb1 et Cb2. Cette simplification est illustrée par la figure 7. Par rapport au montage de la figure 6, les portes G'1 et G'3 ont simplement, chacune, une troisième entrée reliée au circuit de commutation à seuil bas recevant les signaux en provenance du capteur B (c'est-à-dire à l'entrée EBb de la chaîne de reconnaissance REb). En revanche, les sorties S'1 et S'2 de ce portes ET (ou portes NON-ET) sont maintenant directement reliées aux bascules JKb1 et JKbc, respectivement.

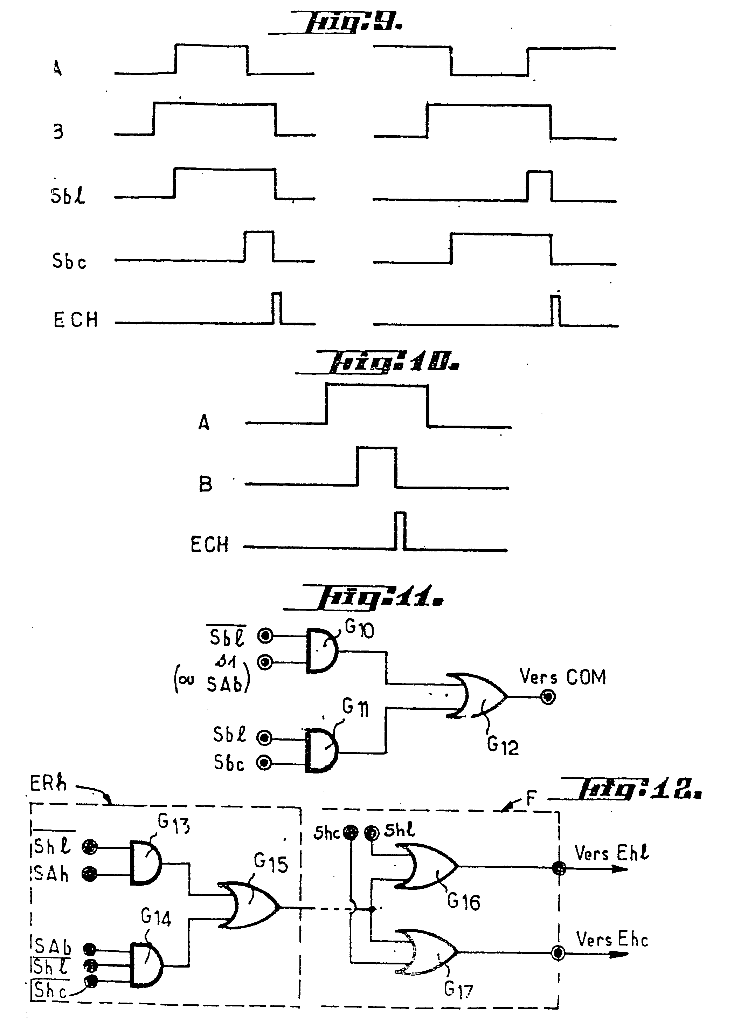

La figure 8 montre un registre à décalage supplémentaire RDBb qui peut être interconnecté entre l'entrée EBb et lesdites troisièmes entrées des portes G'1, G'3 pour retarder le signal provenant du capteur B d'une valeur de 1H. Dans ce cas, lesdites 3ème entrées des portes G'1 et G'3 sont connectées à la sortie s'1 du registre à décalage. On peut aussi utilement mettre à profit ce registre à décalage pour engendrer les signaux de synchronisation et de remise à zéro de tout le système. Ainsi, si on décide de ne prendre en considération la détermination d'un intervalle court ou long (identifiable par les états des moyens formant mémoire JKb1 et JKbc, lesquels sont retransmis aux sorties du multiplexeur MX) qu'à la fin d'un signal engendré par le circuit SEBb, il est facile de réaliser un tel signal de validation ou signal d'échantillonnage en réalisant la condition:

$$ECH = \overline{s'2.s'3}$$

ceci est réalisé par le montage de la figure 8 grâce à une porte ET, G5, dont une entrée est reliée à la sortie s'3 du registre à décalage RDBb et l'autre entrée à la sortie s'2 de ce même registre par l'intermédiaire d'une porte NON G6. La sortie ECH, c'est-à-dire la sortie de la porte G5, peut constituer une sortie du système de lecture conforme à l'invention, au même titre que les sorties SL et SC, si l'unité de traitement' et d'identification mentionnée précédemment est conçue pour recevoir les signaux correspondants de façon à ne prendre en compte les signaux transmis aux sorties SL et/ou SC qu'au' moment ou une impulsion est transmise à la sortie ECH. On peut aussi utiliser le registre à décalage RDBb pour engendrer des impulsions de remise à zéro générale (après l'identification de chaque intervalle) en réalisant par exemple la condition logique:

$$RAZ = \overline{s'3}.s'4$$

Avec cette condition, une impulsion de remise à zéro interviendra donc systématiquement un intervalle de temps de 1H après une impulsion de validation ou d'échantillonnage ECH. Concrètement, le signal de remise à zéro est obtenu grâce à une porte ET G7 (ou une porte NON-ET) dont une entrée est connectée à la sortie s'3 par l'intermédiaire d'une porte NON G8 et dont l'autre entrée est directement reliée à la sortie s'4 du registre à décalage RDBb. Bien entendu, chaque bascule JKb1, .JKbc, JKhl, JKhc comporte une entrée de remise à zéro (non représentée) connectée à la sortie RAZ de la figure 8.

Tout ce qui a été décrit en référence à la chaîne de reconnaissance REb (associé au seuil bas) est valable pour la chaîne de reconnaissance REh (associée au seuil haut) c'est pourquoi cette chaîne de reconnaissance ne sera pas décrite plus en détail.

On va maintenant décrire les deux circuits de détection d'erreur ERb et ERh; ce dernier étant associé avec des moyens de forçage F.

Compte tenu du principe de reconnaissance des intervalles long et court, tel qu'il a été énoncé plus haut, plusieurs situations peuvent être infailliblement reconnues comme des anomalies, à savoir:

1) si on enregistre plus d'une transition ou changement d'état du signal fourni par le circuit SEAb (ou SEAh) pendant la durée d'une impulsion fournie par le circuit SEBb (ou SEBh). Deux cas parmi les plus fréquents sont illustrés par le chronogramme de la figure 9.

2) si une impulsion est fournie par le circuit SEAb (ou SEAh) sans aucune transition ou changement d'état, pendant toute la durée d'une impulsion fournie par le circuit SEBb (ou SEBh). Ce cas est illustré par le chronogramme de la figure 10.

On voit sur la figure 9 que le premier type d'erreur équivaut à détecter la condition logique: Sb1. Sbc sur la chaîne de reconnaissance REb associée au seuil bas ou la condition logique Sh1. Shc sur la chaîne de reconnaissance REh associée au seuil haut. Dans ces conditions, on peut prévoir, au moins dans le circuit ERb, une porte du type ET ou du type NON-ET dont deux entrées sont reliées respectivement aux sorties Sb1 et Sbc de la chaîne de reconnaissance.

Par ailleurs, le second cas est équivalent à la condition logique $\overline{Sb1}.SAb$ pur la chaîne de reconnaissance REb ou à la condition $Sbh.\overline{SAh}$ pour la chaîne de reconnaissance REh. En effet, si le second type d'erreur illustré par la figure 10 se produit, la bascule JKb1 ne change pas d'état

($\overline{JKb1} = 1$, $Sb1 = Sbc = 0$) pendant toute la durée du signal présent à la sortie SAb et notamment au moment de l'impulsion de validation ECH engendrée à la fin de l'impulsion transmise à la sortie SBb.

Pour résumer ce qui précède, le circuit de détection d'erreur ERb pourra par exemple être conforme au schéma de la figure 11. Une porte ET (ou une porte NON-ET) G10 à l'une de ses entrées reliée à une sortie complémentée $\overline{Sb1}$ de la sortie Sb1 et son autre entrée à la sortie s1 (c'est-à-dire en fait à la sortie SAb retardée d'1H) tandis qu'une autre porte du même type, G11, a ses deux entrées reliées aux deux sorties Sb1 et Sbc de la chaîne de reconnaissance REb. Les sorties de ces portes sont connectées aux deux entrées d'une porte G12 du type OU ou du type NON-OU, dont la sortie est reliée à l'entrée COM du multiplexeur MX.

En ce qui concerne le circuit de détection ERh, il n'est pas indispensable de réaliser spécialement la condition logique Sh1.Shc car si une telle condition se réalise sur la chaîne d'identification REh (associée au seuil le plus haut) l'unité de traitement et d'identification l'interprètera comme un caractère non identifiable. C'est du reste le rôle des moyens de forçage F de simuler une telle condition chaque fois qu'un autre type d'erreur survient. C'est ainsi qu'on pourra, comme pour la chaîne REb, détecter la condition $\overline{Sh1}$.SAh représentative d'une erreur du second type illustrée par la figure 10 et persistant sur la chaîne de reconnaissance REh. Un autre type d'erreur, qu'il est plus particulièrement intéressant de prendre en compte lorsqu'il persiste sur la chaîne de reconnaissance REh, correspond au cas où aucune des bascules JKh1 et JKhc n a changé d'état à la fin du signal engendré par le circuit SEbh (c'est-à-dire au moment où une impulsion apparaît à la sortie ECH, ce qui normalement signifierait la lecture d'un intervalle très long) mais que pendant ce temps un signal est réellement présent à la sortie SAb (ou à la sortie s1 du registre à décalage RDAb) ce qui ne peut être qu'une erreur. Dans ces conditions, pour que l'unité de traitement et d'identification n'interprète pas les signaux qui lui sont transmis comme une "fin de caractère" alors qu'il s'agit bel et bien d'une erreur de lecture, le circuit ERh est conçu pour détecter la condition:

$$\overline{Sh1}.Shc.SAb$$

On utilise le signal présent à la sortie SAb de préférence au signal correspondant présent à la sortie SAh pour avoir une meilleure sensibilité de détection d'erreur.

Pour résumer ce qui vient d'être expliqué au sujet de la détection des erreurs sur la chaîne de reconnaissance REh, on peut se reporter à la figure 12 qui montre un mode de réalisation possible du circuit de détection d'erreur ERh associé à des moyens de forçage F. La porte ET (ou une porte NON-ET) G13 joue exactement le même rôle de détection que la porte G10 de la figure 11. La porte ET (ou NON-ET) G14 comporte quant à elle trois entrées dont deux sont reliées à des sorties complémentées ($\overline{Sh1}$ et Shc) des sorties de la chaîne de reconnaissance REh et dont la troisième entrée est reliée à la sortie SAb du circuit SEAb recevant par conséquent des signaux en provenance du capteur A. Les sorties des portes G13 et G14 sont connectées respectivement aux deux entrées d'une porte OU (ou d'une porte NON-OU) G15 et la sortie de cette porte constitue en fait la sortie de signal du circuit ERh.

Le circuit de forçage F est quant à lui constitué de deux portes OU (ou portes NON-OU) G16, G17 à deux entrées, dont deux entrées respectives sont reliées à la sortie du circuit ERh et dont les deux autres entrées sont reliées respectivement aux sorties de signal de la chaîne de reconnaissance REh. Les sorties des portes G16 et G17 sont reliées respectivement aux entrées Eh1 et Ehc du multiplexeur MX. Si on se reporte à la figure 3, on voit donc que le mode de réalisation du circuit de forçage F représenté à la figure 12 est en fait prévu pour être interconnecté entre les sorties de la chaîne de reconnaissance REh et les entrées Ehc, Eh1 du multiplexeur MX. Ainsi, comme mentionné précédemment, en cas d'erreur non corrigeable détectée sur la chaîne REh, le circuit de forçage F. commandé par le circuit ERh agira sur le multiplexeur MX pour transmettre des signaux simultanément aux deux sorties SL et SC ce qui sera interprété comme une erreur par l'unité de traitement et de reconnaissance.

Bien entendu, l'invention n'est nullement limitée aux modes de réalisation décrits et représentés qui n'ont été donnés qu'à titre d'exemple. En particulier, elle comprend tous les moyens constituant des équivalents techniques des moyens décrits ainsi que leurs combinaisons, si celles-ci sont exécutées suivant son esprit et mises en oeuvre dans le cadre des revendications qui suivent.

**Revendications**

1. Dispositif de corrections d'erreurs dans un système de reconnaissance de caractères codés et matérialisés sur un document par une succession de groupements de segments de largeur constante alignés le long d'un trajet de lecture et séparés entre eux, pour défin n caractère donn par des intervalles cou t des intervalles ngs -les caractères étant mêmes séparé par des intervalles très i qui sont reconnaissables électroniquemen r détection d'un phénomène physique, notamment magnétique, par un type de capteur approprié, ce dispositif comprenant au moins une tête de lecture disposée en regard dudit trajet de lecture, un moyen d'entraînement assurant un mouvement relatif entre cette tête et ledit document, deux premiers circuits de commutation à seuil (SEAb, SEAh) ayant des valeurs de seuil respectives différentes et chacun une entrée reliée à la sortie de signal analogique de la tête, deux chaînes de reconnaissance distinctes (REb, REh) comportant chacune:

— un premier moyen monostable (tel que MOb1), relié à l'un respectif des premiers circuits de commutation à seuil,

— un premier circuit combinatoire (tel que Cb1) réalisant le produit logique et dont l'une des entrées est reliée audit premier moyen monostable (MOb1),

— et un premier moyen formant mémoire (tel que JKb1) et pourvu d'une entrée connectée à la sortie dudit premier circuit combinatoire (tel que Cb1),

ce dispositif comprenant encore, d'une part, un circuit de sélection (MX) avec une entrée de chaque chaîne de reconnaissance, ce circuit de sélection comportant des moyens de pilotage (COM) permettant de connecter une entrée à la sortie, d'autre part des moyens de détection (ERb, ERh) d'erreur d'identification connectés auxdites chaînes de reconnaissance (telles que REb) et couplés auxdits moyens de pilotage (COM) pour activer ces derniers à provoquer et poursuivre un ordre de succession prédéterminé tant qu'une erreur est détectée dans les signaux transmis, ledit dispositif étant caractérisé en ce que ladite tête (12) comporte deux capteurs (A, B) du type précité, espacés l'un de l'autre d'une distance $e$ vérifiant la double inégalité:

$$b — 1 < e < a + 1$$

$a$ et $b$ représentant respectivement un intervalle court et un intervalle long et 1 représentant la largeur d'un segment précité, le premier capteur (A) étant disposé pour lire la présence desdits segments avant le second capteur (B) pendant un mouvement relatif entre ladite tête et ledit document, chacun de ces capteurs étant pourvu d'une sortie de signal analogique (SA, SB) représentatif des intervalles lus par ce capteur, et en ce qu'il comporte:

— $m$ ($m$ entier supérieur à 1) premiers circuits de commutation à seuil (SEAb, SEAh), ayant des valeurs de seuil respectives différentes et pourvus chacun d'une entrée ($E_0Ab$, $E_0Ah$) reliée à la sortie de signal analogique (SA) du premier capteur,

— $m$ seconds circuits de commutation à seuil (SEBb, SEBh), ayant chacun une valeur de seuil égale à celle de l'un respectif de $m$ premiers circuits de commutation à seuil, et pourvus chacun d'une entrée ($E_0Bb$, $E_0Bh$) reliée à la sortie de signal analogique (SB) du second capteur,

— $m$ chaînes de reconnaissance (telles que REb, REh) distinctes ($m$ entier supérieur à 1) comportant chacune:

— le premier moyen monostable (tel que MOb 1) sensible à un front montant, ce premier moyen étant relié à l'un respectif (tel que SEAb) des $m$ premiers circuits de commutation à seuil et étant agencé pour être activé à chaque front montant du signal provenant de ce premier circuit de commutation à seuil,

— le premier circuit combinatoire (tel que Cb1) dont les entrées sont reliées audit premier moyen monostable (MOb1) et au second circuit de commutation à seuil (SEBb) qui a la même valeur de seuil que ledit premier circuit de commutation à seuil, ce premier circuit combinatoire étant agencé pour fournir un signal de sortie significatif lorsqu'un signal en provenance dudit premier moyen monostable (MOb1) survient pendant la durée d'une impulsion engendrée par ce second circuit de commutation à seuil (SEBb),

— le premier moyen formant mémoire (tel que JKb1) et pourvu d'une entrée connectée à la sortie dudit premier circuit combinatoire (tel que Cb1),

— un second moyen monostable (tel que MOb2) sensible à un front descendant, ce second moyen étant relié au même premier circuit de commutation à seuil (SEAb) que ledit premier moyen monostable, ce second moyen monostable étant agencé pour être activé à chaque front descendant du signal provenant dudit premier circuit de commutation à seuil,

— un second moyen combinatoire (tel que Cb2) réalisant le produit logique et dont les entrées sont reliées audit second moyen monostable (MOb2) et au second circuit de commutation à seuil (SEBb) qui a la même valeur de seuil que ledit premier circuit de commutation à seuil, ce second moyen combinatoire étant agencé pour fournir un signal de sortie significatif lorsqu'un signal en provenance dudit second moyen monostable survient pendant la durée d'une impulsion engendrée par ce second circuit de commutation à seuil (SEBb),

— et un second moyen formant mémoire (tel que JKbc) et pourvu d'une entrée connectée à la sortie dudit second circuit combinatoire (tel que Cb2),

— un circuit de sélection (MX) à $m$ positions comportant deux sorties de signaux (SL, SC) correspondant respectivement à un intervalle long et à un intervalle court, et $m$ groupes de deux entrées (tels que Eb1 et Ebc ou Eh1 et Ehc) reliés chacun respectivement aux sorties (telles que Sb1 et Sbc) des premier et second moyens formant mémoire (tels que JKb1 et JKbc) de chacune respective des $m$ chaînes de reconnaissance (telles que REb et REh), ce circuit de sélection comportant également des moyens de pilotage (COM) permettant de connecter les deux entrées (telles que Eb1 et Ebc) de l'un des $m$ groupes aux deux sorties (SL, SC) dudit circuit de sélection dans un ordre de succession prédéterminé allant du groupe relié à la chaîne de reconnaissance associée aux circuits de commutation à seuil le plus bas jusqu'au groupe relié à la chaîne de reconnaissance associée aux circuits de commutation à seuil le plus haut, les chaînes de reconnaissance reliées auxdits *m* groupes successifs de deux entrées correspondant à des seuils de valeurs croissantes,

— et des moyens de détection (ERb, Erh) d'erreur d'identification connectés auxdites chaînes de reconnaissance (telles que REb, REh) et indiquant une erreur si deux impulsions apparaissent simultanément dans la chaîne de reconnaissance associée aux circuits de commutation à seuil le plus bas, ou s'il y a présence d'une impulsion du premier circuit au seuil bas et absence d'une impulsion en provenance du premier moyen formant mémoire, ces moyens de détection d'erreur étant couplés auxdits moyens de pilotage (COM) pour activer ces derniers à provoquer et poursuivre l'ordre de succession prédéterminé précité tant qu'une erreur est détectée dans les signaux transmis par celle des *m* chaînes de reconnaissance dont les sorties sont alors connectées aux sorties dudit circuit de sélection.

2. Dispositif selon la revendication 1, caractérisé en ce que lesdits premier et deuxième moyens formant monostables (tels que MOb1 et MOb2) de chacun des *m* chaînes de reconnaissance sont combinés et comprennent un moyen formant registre à décalage (RDAb), dont une entrée de signal (EAb) est reliée à la sortie (SAb) de celui des premiers circuits de commutation à seuil qui est associé à cette chaîne, et comportant des première et deuxième sorties (s1, s2), que ladite première sortie (s1) est directement connectée à une entrée d'une première porte (G1) du type ET ou du type NON-ET tandis que ladite seconde sortie (s2) est reliée à une autre entrée de ladite première porte par l'intermédiaire d'une porte NON (G2), et que ladite première sortie (s1) est aussi reliée à une entrée d'une deuxième porte (G3) du type ET ou du type NON-ET par l'intermédiaire d'une porte NON (G4) tandis que ladite deuxième sortie (s2) est directement connectée à une entrée de ladite deuxième porte (G3).

3. Dispositif selon la revendication 2, caractérisé en ce que, dans chaque chaîne, lesdits premier et second circuits combinatoires (Cb1, Cb2) sont combinés auxdits premier et second moyens formant monostables (MOb1, MOb2), lesdites première et seconde portes (G'1, G'3) ayant chacune trois entrées dont une est reliée à la sortie (SBb) de celui des seconds circuits de commutation à seuil qui est associé à cette chaîne, éventuellement par l'intermédiaire d'un registre à décalage (RDAb).

4. Dispositif selon l'une quelconque des revendications 1 à 3 caractérisé en ce que *m* = 2.

5. Dispositif selon la revendication 4, caractérisé en ce que le circuit de sélection (MX) précité comporte un multiplexeur ayant deux groupes de deux entrées (Eb1, Ebc, et Eh1, Ehc),

deux sorties (SL, SC) et une entrée de commutation (COM); ledit circuit multiplexeur faisant correspondre les deux entrées (Eb1, Ebc) du groupe relié à la chaîne de reconnaissance (REb) associée au seuil bas auxdites deux sorties (SL, SC) lorsque ladite entrée de commutation (COM) ne reçoit aucun signal et faisant correspondre les deux entrées (Eh1, Ehc) du groupe relié à la chaîne de reconnaissance (REh) associée au seuil haut auxdites deux sorties (SL, SC) lorsque ladite entrée de commutation (COM) reçoit un signal; et que les moyens précités de détection d'erreur d'identification comportent un circuit de détection d'erreur (ERb) sur ladite chaîne de reconnaissance associée au seuil bas dont une sortie de signal est connectée à ladite entrée de commutation (COM).

6. Dispositif selon la revendication 5, caractérisé ence que ledit circuit de détection d'erreur (ERb) sur la chaîne de reconnaissance associée au seuil bas comporte au moins une porte (G11) du type ET ou du type NON-ET dont deux entrées sont reliées respectivement aux deux sorties (Sb1, Sbc) de la chaîne de reconnaissance (REb) associée au seuil bas.

7. Dispositif selon la revendication 6, caractérisé en ce que ledit circuit de détection d'erreur (ERb) sur la chaîne de reconnaissance (REb) associée au seuil bas comporte au moins une seconde porte (G10) du type ET ou du type NON-ET dont une entrée est reliée à une sortie complémentée (Sb1) correspondant à l'intervalle long de la chaîne de reconnaissance (REb) associée au seuil bas et dont une autre entrée est reliée au circuit de commutation à seuil bas (SEAb) associé au premier capteur précité (A).

8. Dispositif selon l'une quelconque des revendications 5 à 7, caractérisé en ce que le groupe d'entrées (Eh1, Ehc) dudit multiplexeur (MX) relié à la chaîne de reconnaissance (REh) associée au seuil haut est connecté à ladite chaîne par l'intermédiaire de moyens de forçage (F) dont une entrée principale de forçage est connectée à la sortie d'un circuit de détection d'erreur ERh) sur ladite chaîne de reconnaissance (REh) associée au seuil haut.

9. Dispositif selon la revendication 8, caractérisé en ce que ledit circuit de détection d'erreur (ERh) sur la chaîne de reconnaissance (REh) associée au seuil haut comporte au moins une porte (G13) du type ET ou du type NON-ET dont une entrée est reliée à une sortie complémentée (Sh1) correspondant à l'intervalle long de la chaîne de reconnaissance (REh) associée au seuil haut et dont une autre entrée est reliée à la sortie du circuit de commutation à seuil haut (SEAh) associé au premier capteur précité (A).

10. Dispositif selon la revendication 8 ou 9, caractérisé en ce que ledit circuit de détection d'erreur (ERh) sur la chaîne de reconnaissance (REh) associée au seuil haut comporte au moins une porte (G14) du type ET ou du type NON-ET dont deux entrées sont reliées respectivement à deux sorties complémentées (Sh1, Shc) corres-

pondant aux deux intervalles long et court de la chaîne de reconnaissance (REh) associée au seuil haut et dont une troisième entrée est reliée à la sortie du circuit de commutation à seuil bas (SEAb) associé au premier capteur précité (A).

## Patentansprüche

1. Vorrichtung zur Korrektur von Fehlern in einem Erkennungssystem für codierte Zeichen, die auf einem Dokument materialisiert sind durch eine Aufeinanderfolge von Gruppierungen von Segmenten konstanter Breite, die längs eines Leseweges ausgerichtet und untereinander getrennt sind, um ein gegebenes Zeichen zu definieren, durch kurze Intervalle und lange Intervalle—wobei die Zeichen selbst durch sehr lange Intervalle getrennt sind—, die elektronisch erkennbar sind durch Erfassen eines physischen, insbesondere magnetischen Phänomens durch einen geeigneten Fühler, wobei diese Vorrichtung wenigstens einen gegenüber dem Leseweg angeordneten Lesekopf, eine Anbtriebseinrichtung, die eine Relativbewegung zwischen diesem Kopf und dem Dokument gewährleistet, zwei erste Schwellwert-Schaltkreise (SEAb, SEAh), die jeweils verschiedene Schwellwerte aufweisen und jeweils mit einem Eingang an den Analogsignal-Ausgang des Kopfes angeschlossen sind, sowie zwei getrennte Erkennungskanäle (REb, REh) umfaßt, die jeweils enthalten:
— ein erste monostabile Einrichtung (wie MOb1), die an den einen zugehörigen ersten Schwellwert-Schaltkreis angeschlossen ist,
— eine erste Kombinationsschaltung (wie Cb1), welche das logische Produkt bildet und wovon der eine Eingang mit der ersten monostabilen Einrichtung (MOb1) verbunden ist,
— und eine erste Einrichtung, die einen Speicher (wie JKb1) bildet und mit einem Eingang versehen ist, der an den Ausgang der ersten Kombinationsschaltung (wie Cb1) angeschlossen ist,
wobei die Vorrichtung ferner enthält: zum einen eine Selektionsschaltung (MX) mit einem Eingang jedes Erkennungskanals, wobei diese Selektionsschaltung eine Leiteinrichtung (COM) umfaßt, die es gestattet, einen Eingang mit dem Ausgang zu verbinden, und zum anderen Mittel (ERb, ERh) zur Feststellung eines Identifizierungsfehlers, die mit den Erkennungskanälen (wie REb) verbunden sind und an die Leiteinrichtung (COM) angekoppelt sind, um diese zu aktivieren, damit sie eine vorbestimmte Reihenfolge der Aufeinanderfolge hervorruft und fortsetzt, solange ein Fehler in den übertragenen Signalen festgestellt wird, wobei die Vorrichtung dadurch gekennzeichnet ist, daß der Kopf (12) zwei Fühler (A, B) des genannten Typs umfaßt, die voneinander einen Abstand $e$ haben, welcher der folgenden doppelten Ungleichung genügt:

$$b - 1 < e < a + 1,$$

worin a und b ein kurzes Intervall bzw. ein langes Intervall darstellen und 1 den Wert eines vorgenannten Segments darstellt, wobei der erste Fühler (A) so angeordnet ist, daß er das Vorhandensein der Segmente vor dem zweiten Fühler (B) ausliest während einer Relativbewegung zwischen dem Kopf und dem Dokument, und wobei jeder dieser Fühler mit einem Analogsignal-Ausgang (SA, SB) versehen ist, welcher für die von diesem Fühler ausgelesenen Intervalle repräsentativ ist, und daß sie unfaßt:
— $m$ ($m$ ganzzahlig und größer als 1) erste Schwellwert-Schaltkreise (SEAb, SEAh) mit jeweils verschiedenen Schwellwerten und mit jeweils einem Eingang ($E_0Ab$, $E_0Ah$), der mit dem Analogsignal-Ausgang (SA) des ersten Fühlers verbunden ist,
— $m$ zweite Schwellwert-Schaltkreise (SEBb, SEBh), die jeweils einen Schwellwert aufweisen, der gleich demjenigen des jeweiligen der $m$ ersten Schwellwert-Schaltkreise ist, und jeweils mit einem Eingang ($E_0Bb$, $E_0Bh$) versehen sind, der mit dem Analogsignal-Ausgang (SB) des zweiten Fühlers verbunden ist,
— $m$ verschiedene Erkennungskanäle (REb, REh) ($m$ ganzzahlig und größer als 1), die jeweils enthalten:
— die erste monostabile Einrichtung (wie MOb1), die für eine Anstiegsflanke empfindlich ist, wobei diese erste Einrichtung mit einem entsprechenden Schwellwert-Schaltkreis (wie SEAb) der $m$ ersten Schwellwert-Schaltkreise verbunden ist und so angeordnet ist, daß sie bie jeder Anstiegsflanke des aus diesem ersten Schwellwert-Schaltkreis stammenden Signals aktiviert wird,
— die erste Kombinationsschaltung (wie Cb1), deren Eingänge mit der ersten monostabilen Einrichtung (MOb1) und mit dem zweiten Schwellwert-Schaltkreis (SEBb) verbunden sind, welcher denselben Schwellwert aufweist wie der erste Schwellwert-Schaltkreis, wobei diese erste Kombinationsschaltung so angeordnet ist, daß sie ein merkliches Signal liefert, wenn ein Signal aus der ersten monostabilen Einrichtung (MOb1) während der Dauer eines Impulses auftritt, der von diesem zweiten Schwellwert-Schaltkreis (SEBb) erzeugt wird,
— die erste einen Speicher bildende Einrichtung (wie JKb1), die mit einem Eingang versehen ist, welcher an den Ausgang der ersten Kombinationsschaltung (wie CB1) angelegt ist,
— eine zweite monostabile Einrichtung (wie MOb2), die für eine Abfallflanke empfindlich ist, wobei diese zweite Einrichtung mit demselben ersten Schwellwert-Schaltkreis (SEAb) wie die erste monostabile Einrichtung verbunden ist und wobei diese zweite monostabile Einrichtung derart angeordnet ist, daß sie bei jeder Abfallflanke des aus dem ersten Schwellwert-Schaltkreis stammenden Signals aktiviert wird,

— eine zweite Kombinationseinrichtung (wie Cb2), welche das logische Produkt bildet und deren Eingänge mit der zweiten monostabilen Einrichtung (MOb2) und mit dem zweiten Schwellwert-Schaltkreis (SEBb) verbunden sind, welcher denselben Schwellwert aufweist wie der erste Schwellwert-Schaltkreis, wobei diese zweite Kombinationseinrichtung so angeordnet ist, daß sie ein merkliches Ausgangssignal liefert, wenn ein Signal aus der zweiten monostabilen Einrichtung während der Dauer eines Impulses auftritt, der von dem zweiten Schwellwert-Schaltkreis (SEBb) erzeugt wird,

— und eine zweite einen Speicher bildenden Einrichtung (wie JKbc), die mit einem Eingang versehen ist, welcher an den Ausgang der zweiten Kombinationsschaltung (wie · Cb2) angeschlossen ist,

— eine Selektionsschaltung (MX) mit *m* Positionen, die zwei Signalausgänge (SL, SC) aufweist, die einem langen Intervall bzw. einem kurzen Intervall entsprechen, und mit *m* Gruppen von zwei Eingängen (wie Eb1 und Ebc oder Eh1 und Ehc), versehen ist, wovon jede jeweils mit den Ausgängen (wie Sb1 und Sbc) der ersten und der zweiten einen Speicher bildenden Einrichtung (wie JKb1 und JKbc) jeweils eines entsprechenden der *m* Erkennungskanäle (wie REb und REh) verbunden ist, wobei diese Selektionsschaltung ferner eine Leiteinrichtung (COM) umfaßt, die es gestattet, die beiden Eingänge (wie Eb1 und Ebc) der einen der *m* Gruppen mit den zwei Ausgängen (SL, SC) der Selektionsschaltung in einer vorbestimmten Reihenfolge der Aufeinanderfolge zu verbinden, die von der mit dem Erkennungskanal, welcher den Schaltkreisen mit dem niedrigsten Schwellwert zugeordnet ist, verbundenen Gruppe bis zu der Gruppe geht, die mit dem Erkennungskanal verbunden ist, welcher den Schaltkreisen mit dem höchsten Schwellwert zugeordnet ist, wobei die Erkennungskanäle, die mit den *m* aufeinanderfolgenden Gruppen von zwei Eingängen verbunden sind, Schwellwerten zunehmender Werte entsprechen,

— und Detektionsmittel (ERb, ERh) zur Feststellung eines Identifizierungsfehlers, welche mit den Erkennungskanälen (wie REb, REh) verbunden sind und einen Fehler anzeigen, wenn zwei Impulse gleichzeitig in dem Erkennungskanal erscheinen, der den Schaltkreisen mit dem niedrigsten Schwellwert zugeordnet ist, oder wenn ein Impuls des ersten Schaltkreises mit niedrigem Schwellwert vorhanden ist und ein Impuls aus der ersten einen Speicher bildenden Einrichtung ausbleibt, wobei diese Fehlerdetektionsmittel an die Leiteinrichtung (COM) angekoppelt sind, um diese zu aktivieren, damit sie die vorbestimmte Reihenfolge der Aufeinanderfolge hervorrufen und fortsetzen, solange ein Fehler festgestellt wird in den Signalen, die von demjenigen der *m* Erkennungskanäle übertragen werden, dessen Ausgänge dann mit den Ausgängen der Selektionsschaltunge verbunden sind.

2. Vorrichtung nach Anspruch 1, dadurch gekennzeichnet, daß die erste und die zweite ein monostabiles Element bildende Einrichtung (wie MOb1 und MOb2) jedes der *m* Erkennungskanäle kombiniert sind und eine ein Schieberegister (RDAb) bildende Einrichtung umfassen, wovon ein Signaleingang (EAb) mit dem Ausgang (SAb) desjenigen der ersten Schwellwert-Schaltkreise verbunden ist, welcher diesem Kanal zugeordnet ist, sowie mit einem ersten und einem zweiten Ausgang (s1, s2), daß der erste Ausgang (s1) direkt mit einem Eingang einer ersten AND- oder NAND-Schaltung (G1) verbunden ist, während der zweite Eingang (s2) über eine Negierschaltung (G2) mit einem anderen Eingang der ersten Verknüpfungsschaltung verbunden ist, und daß der erste Ausgang (s1) ferner mit einem Eingang einer zweiten AND- oder NAND-Verknüpfungsschaltung (G3) über eine Negierschaltung (G4) verbunden ist, während der zweite Ausgang (s2) direkt mit einem Eingang der zweiten Verknüpfungsschaltung (G3) verbunden ist.

3. Vorrichtung nach Anspruch 2, dadurch gekennzeichnet, daß in jedem Kanal die erste und die zweite Kombinationsschaltung (Cb1, Cb2) kombiniert sind mit der ersten und der zweiten ein monostabiles Element bildenden Einrichtung (MOb1, MOb2), wobei die erste und die zweite Verknüpfungsschaltung (G'1, G'3) jeweils drei Eingänge aufweisen, wovon einer mit dem Ausgang (SBb) desjenigen Schwellwert-Schaltkreises verbunden ist, der diesem Kar zugeordnet ist, und zwar ggf. über ein Sch eregister (RDAb).

4. Vorrichtung nach einem der Ansprüche 1 bis 3, dadurch gekennzeichnet, daß *m* = 2.

5. Vorrichtung nach Anspruch 4, dadurch gekennzeichnet, daß die vorgenannte Selektionsschaltung (MX) einen Multiplexer umfaßt, der zwei Gruppen von zwei Eingängen (Eb1, Ebc und Eh1, Ehc), zwei Ausgänge (SL, SC) und einen Umschalteingang (COM) aufweist; wobei die Multiplexerschaltung bewirkt, daß die zwei Eingänge (Eb1, Ebc) der Gruppe, welche mit dem dem niedrigen Schwellwert zugeordneten Erkennungskanal (REb) verbunden ist, den zwei Ausgängen (SL SC) entsprechen, wenn der Umschalteingang (COM) keinerlei Signal empfängt, und bewirkt, daß die zwei Eingänge (Eh1, Ehc) der Gruppe, welche mit dem dem hohen Schwellwert zugeordneten Erkennungskanal (REh) verbunden ist, den zwei Ausgängen (SL, SC) entsprechen, wenn der Umschalteingang (COM) ein Signal empfängt; und daß die vorgenannten Detektionsmittel zur Erfassung eines Identifizierfehlers eine Detektionsschaltung (ERb) zur Erfassung eines Fehlers an dem genannten Erkennungskanal umfaßt, welcher dem niedrigen Schwellwert zugeordnet ist, wovon ein Signaleingang mit dem Umschalteingang (COM) verbunden ist.

6. Vorrichtung nach Anspruch 5, dadurch gekennzeichnet, daß die Detektionsschaltung (ERb) zur Erfassung eines Fehlers an dem Erkennungskanal, der dem niedrigen Schwellwert zugeordnet ist, wenigstens eine AND- oder NAND-Verknüpfungsschaltung (G11) umfaßt, wovon zwei Eingänge jeweils mit den zwei Ausgängen (Sb1, Sbc) des dem niedrigen Schwellwert zugeordneten Erkennungskanals (REb) verbunden sind.

7. Vorrichtung nach Anspruch 6, dadurch gekennzeichnet, daß die Detektionsschaltung (ERb) zur Erfassung eines Fehlers an dem dem niedrigen Schwellwert zugeordneten Erkennungskanal (REb) wenigstens eine zweite AND- oder NAND-Verknüpfungsschaltung (G10) umfaßt, wovon ein Eingang mit einem Komplementausgang (Sb1) verbunden ist, welcher dem langen Intervall des dem niedrigen Schwellwert zugeordneten Erkennungskanals (REb) entspricht, und wovon ein anderer Eingang mit dem den niedrigen Schwellwert aufweisenden Schaltkreis (SEAb) verbunden ist, welcher dem ersten genannten Fühler (A) zugeordnet ist.

8. Vorrichtung nach einem der Ansprüche 5 bis 7, dadurch gekennzeichnet, daß die Gruppe von Eingängen (Eh1, Ehc) des Multiplexers (MX), die mit dem dem hohen Schwellwert zugeordneten Erkennungskanal (REh) verbunden ist, mit dem Kanal über Steilmittel (F) verbunden ist, wovon ein Haupt-Stelleingang mit dem Ausgang einer Detektionsschaltung (ERh) zur Erfassung eines Fehlers an dem dem hohen Schwellwert zugeordneten Erkennungskanal (REh) verbunden ist.

9. Vorrichtung nach Anspruch 8, dadurch gekennzeichnet, daß die Detektionsschaltung (ERh) zur Feststellung eines Fehlers an dem dem hohen Schwellwert zugeordneten Erkennungskanal (REh) wenigstens eine AND- oder NAND-Verknüpfungsschaltung (G13) umfaßt, wovon ein Eingang mit einem Komplementausgang (Sh1), der dem langen Intervall des dem hohen Schwellwert zugeordneten Erkennungskanals (REh) entspricht, verbunden ist und wovon ein anderer Eingang mit dem Ausgang des den hohen Schwellwert aufweisenden Schaltkreises (SEAh), welcher dem ersten genannten Fühler (A) zugeordnet ist, verbunden ist.

10. Vorrichtung nach Anspruch 8 oder 9, dadurch gekennzeichnet, daß die Detektionsschaltung (ERh) zur Feststellung eines Fehlers an dem dem hohen Schwellwert zugeordneten Erkennungskanal (REh) wenigstens eine AND- oder NAND-Verknüpfungsschaltung (G14) umfaßt, deren zwei Eingänge jeweils mit zwei Komplementausgängen (Sh1, Shc) verbunden sind, welche den zwei Intervallen bzw. dem langen und kurzen Intervall des Erkennungskanals (REh) entsprechen, welcher dem hohen Schwellwert zugeordnet ist, und wovon ein dritter Eingang mit dem Ausgang des den niedrigen Schwellwert aufweisenden Schaltkreises (SEAb) verbunden ist, welcher dem ersten genannten Fühler (A) zugeordnet ist.

**Claims**

1. A device for the correction of errors in a system for the recognition of characters which are coded and established on a document by a succession of groups of segments of constant width aligned along a reading path and separated from each other by short intervals and by long intervals in order to define a given character — the characters themselves being separated by very long intervals — which are electronically recognisable by detection of a physical effect and in particular a magnetic effect by means of a sensor of appropriate type, this device comprising at least one reading head situated in alignment with the said reading path, a driving means providing for a relative movement between this head and the said document, two first threshold switching circuits (SEAb, SEAh) having different threshold values respectively and each having an input connected to the analog signal output of the head, two separate recognition channels (REb, REh) each comprising:

— a first monostable means (such as MOb1) connected to the respective one of the first threshold switching circuits,

— a first combinatory circuit (such as Cb1) producing the logic product and of which one of the inputs is connected to the said first monostable means (MOb1),

— and a first means forming a memory (such as JKb1) and provided with an input connected to the output of the said first combinatory circuit (such as Cb1),

said device also comprising, on the other hand, a selection circuit (MX) with an input for each recognition channel, this selection circuit comprising controlling means (COM) enabling to connect on an input to the output, on the other hand means (ERb, ERh) for detecting identification errors connected to the said recognition channels (such as REb) and coupled to the said controlling means (COM) for actuating these latter to generate and follow a predetermined order of succession whilst an error is being detected in the signals transmitted, the said device being characterised in that the said head (12) has two sensors (A, B) of the aforesaid kind, which are spaced apart by a distance $e$ complying with the double inequality:

$$b - 1 < e < a + 1$$

a and b respectively representing a short interval and a long interval and 1 representing the width of said segment, the first sensor (A) being arranged to detect the presence of the said segments before the second sensor (B) during a relative movement between the said head and the said document, each of said sensors being equipped with an output of an analog signal (SA, SB) representing intervals read by this sensor, and in that it comprises:

— $m$ ($m$: an integer greater than 1 first threshold switching circuits (SEAb, SEAh) having threshold values which are respectively different, and each having an input ($E_0Ab$, $E_0Ah$) connected to the analog signal output (SA) of the first sensor,

— $m$ second threshold switching circuits (SEBb, SEBh), each having a threshold value equal to that of the respective one of the $m$ first threshold switching circuits, and each having an input ($E_0Bb$, $E_0Bh$) connected to the analog signal output (SB) of the second sensor, $m$ recognition channels (such as (REb, REh) which are separate ($m$: an integer greater than 1), each comprising:

— the first monostable means (such as $MOb_1$) sensing a rising front, this first means being connected to the respective one (such as SEAb) of the $m$ first threshold switching circuits and being arranged so as to be active to each rising front of the signal coming from this first threshold switching circuit,

— the first combinatory circuit (such as Cb1) of which the inputs are connected to the said first monostable means MOb1) and to the second threshold switching circuit (SEBb) which has the same threshold value as the said first threshold switching circuit, this first combinatory circuit being arranged so as to provide a significant output signal when a signal coming from the said first monostable means (MOb1) arrives during the period of a pulse generated by this second threshold switching circuit (SEBb),

— the first memory forming means (such as JKb1) provided with an input connected to the output of the said first combinatory circuit (such as Cb1),

— a second monostable means (such as MOb2) sensing a falling front, this second means being connected to the same first threshold switching circuit (SEAb) as the said first monostable means, this second monostable means being arranged so as to be active each falling front of the signal coming from the said first threshold switching circuit,

— a second combinatory means (such as Cb2) forming the logic product and of which the inputs are connected to the said second monostable means (MOb2) and to the second threshold switching circuit (SEBb) which has the same threshold value as the said first threshold switching circuit, this second combinatory means being arranged to provide a significant output signal when a signal coming from the said second monostable means arrives during the period of a pulse generated by this second threshold switching circuit (SEBb),

— and a second memory forming means (such as JKbc) provided with an input connected to the output of the said second combinatory circuit (such as (Cb2),

— an $m$-position selection circuit (MX) comprising two signal outputs (SL, SC) respectively corresponding to a long interval and to a short interval, and $m$ groups of two inputs (such as Eb1 and Ebc or Eh1 and Ehc) each being connected respectively to the outputs (such as Sb1 and Sbc) of the first and second memory forming means (such as JKb1 and JKbc) of each respective one of the $m$ recognition channels (such as REb and REh), this selection circuit equally comprising controlling means (COM) enabling connecting the two inputs (such as Eb1 and Ebc) of the one of the $m$ groups to the two outputs (SL, SC) of the said selection circuit in a predetermined order of succession starting from the group connected to the recognition channel associated with the threshold switching circuits having the lowest threshold and up to the group connected to the recognition channel associated with the threshold switching circuits having the highest threshold, the recognition channels connected to the said $m$ successive groups of two inputs corresponding to thresholds of increasing value,

— and means (ERb, ERh) for detecting identification errors connected to the said recognition channels (such as REb, REh), and indicating an error if two pulses appear simultaneously in the recognition channel associated with the switching circuits having the lowest threshold, or in the presence of a pulse from the first.low threshold circuit and absence of a pulse coming from the first memory forming means, these error detection means being coupled to the said controlling means (COM) so as to activate these latter to cause and pursue the aforesaid predetermined order of succession whilst an error is being detected in the signals transmitted by that of the $m$ recognition channels of which the outputs are then connected to the outputs (inputs) of the said selection circuit.

2. A device according to claim 1, characterised in that the said first and second monostable-forming means (such as MOb1 and MOb2) of each of the $m$ recognition channels are combined and comprise a means forming a shift register (RDAb) of which a signal input (EAb) is connected to the output (SAb) of that of the first threshold switching circuits which is associated with this channel, and comprising first and second output (s1, s2), in that the said first output (s1) is directly connected to an input of a first gate (G1) of the AND type or of the NAND type, whereas the said second output (s2) is connected to another input of the said first gate via a NOT gate (G2) and that the said first output (s1) is also connected to an input of a second gate (G3) of the AND type or. of the NAND type via a NOT gate (G4) whereas the said second output (s2) is directly connected to an input of the said second gate (G3).

3. A device according to claim 2, characterised in that — in each channel — the said first and second combinatory circuits (Cb1, Cb2) are combined with the said first and second monostable-forming means (MOb1, MOb2), the said first and second gates (G'1, G'3) each having three inputs of which one is connected

**0 010 495**

to the output (SBb) of that one of the second threshold switching circuits which is associated with this channel, possibly; via a shift register (RDAb).

4. A device according to any one of claims 1 to 3, characterised in that $m = 2$.

5. A device according to claim 4, characterised in that the aforesaid selection circuit (MX) comprises a multiplexer having two groups of two inputs (Eb1, Ebc and Eh1, Ehc), two outputs (SL, SC) and a switching input (COM); the said multiplexer circuit causing the two inputs (Eb1, Ebc) of the group connected to the recognition channel (REb) associated with the low threshold to correspond to the said two outputs (SL, SC) when the said switching input (COM) does not receive any signal and causing the two inputs (Eh1, Ehc) of the group connected to the identification channel (REh) associated with the high threshold to correspond to the said two outputs (SL, SC) when the said switching input (COM) receives a signal; and that the aforesaid identification error detection means comprise an error detector circuit (ERb) on the said recognition channel associated with the low threshold of which one signal output is connected to the said switching input (COM).

6. A device according to claim 5, characterised in that the said error detection circuit (ERb) on the recognition channel associated with the low threshold comprises at least one gate (G11) of the AND type or of the NAND type of which two inputs are connected, respectively, to the two inputs (Sb1, Sbc) of the recognition channel (REb) associated with the low threshold.

7. A device according to claim 6, characterised in that the said error detector circuit (ERb) on the recognition channel (REb) associated with the low threshold comprises at least one second gate (G10) of the AND type or of the NAND type of which one input is connected to a complemented output (Sb1) corresponding to the long interval of the recognition channel (REb) associated with the low threshold and of which another input is connected to the low-threshold switching circuit (SEAb) associated with the said first sensor (A).

8. A device according to any one of claims 5 to 7, characterised in that the group of inputs (Eh1, Ehc) of the said multiplexer (MX) connected to the recognition channel (Reh) associated with the high threshold is connected to the said channel via driving means (F) of which a principal drive input is connected to the output of a circuit (ERh) for error detection on the said recognition channel (Reh) associated with the high threshold.

9. A device according to claim 8, characterised in that the said circuit (ERh) for error detection on the recognition channel (REh) associated with the high threshold comprises at least one gate (G13) of the AND type or of the NAND type of which one input is connected to a complemented output (Sh1) corresponding to the long interval of the recognition channel (REh) associated with the high threshold and of which another input is connected to the output of the high-threshold switching circuit (SEAh) associated with the aforesaid first sensor (A).

10. A device according to claim 8 or 9, characterised in that the said circuit (ERh) for error detection on the recognition channel (Reh) associated with the high threshold comprises at least one gate (G14) of the AND type or of the NAND type of which two inputs are connected respectively to two complemented outputs (Sh1, Shc) corresponding to the two long and short intervals of the recognition channel (Reh) associated with the high threshold and of which a third input is connected to the output of the low-threshold switching circuit (SEAb) associated with the aforesaid first sensor (A).

FIG.1

FIG.4

FIG.2

FIG.5

0 010 495

FIG.3

2

**0010495**

$MOb_1 / MOb_2$

**Fig. 6.**

EAb

RDAb

$\delta_1$
$\delta_2$
$\delta_3$

$G_1$
$S_1$
Vers Cb1

$G_2$

$G_3$
$S_2$
Vers Cb2

$G_4$

H

**Fig. 7.**

EAb

RDAb

$\delta_1$
$\delta_2$
$\delta_3$

$G'_1$
$S'_1$
Vers JKbℓ

$G_2$

$G'_3$
$S'_2$
Vers JKbc

$G_4$

EBb

H

**Fig. 8.**

EBb

RDBb

$\delta'_1$
$\delta'_2$
$\delta'_3$
$\delta'_4$

$G'_1$

$G'_2$

$G_6$
$G_5$
ECH

$G_8$
$G_7$
RAZ

H

3

**0010495**

*Fig. 9.*

*Fig. 10.*

*Fig. 11.*

*Fig. 12.*

4